# EUROPÄISCHE PATENTANMELDUNG

(11) **EP 4 406 680 A1**
(43) Veröffentlichungstag der Anmeldung: **31.07.2024**
(21) Anmeldenummer: 23153360.5
(22) Anmeldetag: 26.01.2023
(51) Int. Cl.: B23B 51/02

(54) **BOHRWERKZEUG**

(71) Anmelder: CERATIZIT Balzheim GmbH & Co. KG, 88481 Balzheim (DE)
(72) Erfinder: WALCHER, Rainer, 88481 Balzheim (DE); PAULSEN, Tebbe, 88481 Balzheim (DE); HEIM, Peter, 88481 Balzheim (DE)
(74) Vertreter: Ciesla, Dirk

(57) **Zusammenfassung**

Bohrwerkzeug mit zwei Hauptschneiden (2) mit zumindest abschnittsweise bogenförmigem Verlauf, die über eine Querschneide (6) miteinander verbunden sind, einer Bohrerstirn (4), einer Bohrerlängsachse (L) um welche das Bohrwerkzeug (1) in einer Drehrichtung (R) drehbar ist, einer auf der der Bohrerlängsachse (L) liegenden Bohrerspitze (3), zwei entlang der Bohrerlängsachse (L) verlaufenden Spannuten (5), zwischen den Spannuten (5) ausgebildeten Stegen (7), welche umfangsseitig einen Rücken (8) bilden, einer in die Bohrerstirn (4) eingebrachten Ausspitzung (12), wobei, bezogen auf eine Frontalansicht auf die Bohrerstirn (4), ein Öffnungswinkel (cp) einer Spannut (5) an der Bohrerstirn (4) ausgebildet ist, der: bei einem Kegelmantelanschliff der Bohrerstirn (4) definiert ist als aufgespannt zwischen
- einer gedachten Verbindung der Bohrerspitze (3) mit einer Schneidecke (9) der Hauptschneide (2) und
- einer gedachten Verbindung der Bohrerspitze (3) zu einem rückwärtigen Eck (10), welches am Rücken (8) am Übergang der Freifläche (11) in die Spannut (5) gebildet ist,
bei einem Flächen-Anschliff der Bohrerstirn (4) definiert ist als aufgespannt zwischen - einer gedachten Verbindung der Bohrerspitze (3) mit einer Schneidecke (9) der Hauptschneide (2) und
- einem sich nach radial außen erstreckenden Abschnitt einer Kontur (14) der Ausspitzung (12), welcher Öffnungswinkel (cp) zwischen 85° und 95° beträgt, und die Ausspitzung (12) in derart die Bohrerstirn (4) eingebracht ist, dass ein Normalabstand (NA) eines innenliegenden Punktes der Ausspitzung (12) zu einer gedachten Verbindung der Bohrerspitze (3) mit einer Schneidecke (9) kleiner oder gleich ist dem Normalabstand (NU) eines Übergangspunkts (U) zwischen der an die Ausspitzung (12) anschließenden Hauptschneide (2) und der Querschneide (6) zur gedachten Verbindung der Bohrerspitze (3) mit einer Schneidecke (9),
wobei die Ausspitzung (12) am Übergangspunkt (U) ansetzt und knickfrei an die angrenzende Hauptschneide (2) anschließt.

## Beschreibung

Die vorliegende Erfindung betrifft ein Bohrwerkzeug mit den Merkmalen des Oberbegriffs von Anspruch 1. Ferner wird ein Verfahren zur Herstellung des Bohrwerkzeugs angegeben.

Ein gattungsgemäßes Bohrwerkzeug ist beispielsweise aus der EP3038776 (B1) bekannt. Gemäß dieser Druckschrift wird eine günstige Spanabfuhr dadurch realisiert, indem eine Spananlaufschulter einer Ausspitzung einen zur Mittelachse gemessenen Axialwinkel aufweist, der sich mit zunehmendem Abstand zur Stirnseite kontinuierlich verringert.

Aufgabe der vorliegenden Erfindung ist es, ein verbessertes Bohrwerkzeug anzugeben. Insbesondere soll das Bohrwerkzeug günstig, mit wenigen Schleifoperationen, herstellbar sein. Insbesondere soll das verbesserte Bohrwerkzeug eine vorteilhafte Spanabfuhr bei geringen Bearbeitungskräften aufweisen.

Die Aufgabe wird gelöst durch ein Bohrwerkzeug mit den Merkmalen von Anspruch 1.

Das erfindungsgemäße Bohrwerkzeug weist auf:
zwei Hauptschneiden mit zumindest abschnittsweise bogenförmigem Verlauf, die über eine Querschneide miteinander verbunden sind,
eine Bohrerstirn, eine Bohrerlängsachse um welche das Bohrwerkzeug in einer Drehrichtung drehbar ist,
eine auf der der Bohrerlängsachse liegenden Bohrerspitze,
wenigstens zwei entlang der Bohrerlängsachse verlaufende Spannuten, zwischen den Spannuten ausgebildete Stege, welche umfangsseitig einen Rücken bilden,
eine in die Bohrerstirn eingebrachte Ausspitzung,
wobei, bezogen auf eine Frontalansicht auf die Bohrerstirn, ein Öffnungswinkel einer Spannut an der Bohrerstirn bei einem Kegelmantelanschliff aufgespannt wird zwischen:
   - einer gedachten Verbindung der Bohrerspitze mit einer Schneidecke der Hauptschneide und
   - einer gedachten Verbindung der Bohrerspitze zu einem rückwärtigen Eck, welches am Rücken am Übergang der Freifläche in die Spannut gebildet ist,
bei einem Flächenanschliff der Öffnungswinkel aufgespannt wird zwischen:
   - einer gedachten Verbindung der Bohrerspitze mit einer Schneidecke der Hauptschneide und
   - einem sich nach radial außen erstreckenden Abschnitt einer Kontur der Ausspitzung,
welcher Öffnungswinkel zwischen 85° und 95° beträgt,
und die Ausspitzung in die Bohrerstirn eingebracht ist derart, dass ein Normalabstand eines innenliegenden Punktes der Ausspitzung zu einer gedachten Verbindung der Bohrerspitze mit einer Schneidecke kleiner oder gleich ist dem Normalabstand eines Übergangspunkts zwischen der an die Ausspitzung anschließenden Hauptschneide und der Querschneide zur gedachten Verbindung der Bohrerspitze mit einer Schneidecke,
wobei die Ausspitzung am Übergangspunkt ansetzt und knickfrei an die angrenzende Hauptschneide anschließt.
Mit Flächen-Anschliff ist ein Anschliff mit ebenen Freiflächenfacetten gemeint, insbesondere ein Vierflächen-Anschliff.

Durch das Zusammenwirken des erfindungsgemäß kleinen Öffnungswinkels zwischen 85° und 95° mit einer Ausspitzung, die sich weit ins Zentrum erstreckt, ist eine besonders gute axiale Spanabfuhr im Zentrum des Bohrwerkzeugs gewährleistet. Durch die Merkmale wird erreicht, dass insbesondere ein radial innen abgenommener Span von der Ausspitzung unmittelbar axial entlang der Längsachse in die Spannut geleitet wird. Damit gelangt ein radial innen abgenommener Span gar nicht an radial weiter außen liegende Abschnitte der Spannut. Eine wirksame Spanabfuhr, insbesondere zentrumsnah, ist die Folge. Ferner verursacht ein unmittelbar axial abgeleiteter Span nur geringe Reibung an einer Spanfläche des Bohrwerkzeugs.

Wegen der in Abhängigkeit vom Anschliff sich unterschiedlich ergebenden räumlichen Schnittkurven von Ausspitzung und Freiflächen sind die Definitionen des Öffnungswinkels in Abhängigkeit vom jeweiligen Anschliff angegeben.

Bevorzugt ist vorgesehen, dass sich die Ausspitzung weiter in Richtung der gedachten Verbindung der Bohrerspitze mit einer Schneidecke erstreckt als der an die Ausspitzung anschließende Übergangspunkt zwischen Hauptschneide und Querschneide. In anderen Worten ist bevorzugt vorgesehen, dass sich die Ausspitzung über die Querschneide hinweg weiter ins Zentrum des Bohrwerkzeugs erstreckt als der zur betreffenden Ausspitzung gehörige Übergangspunkt zwischen Hauptschneide und Querschneide. Anders ausgedrückt, ragt die Ausspitzung weiter in Richtung einer mittigen Teilungsebene, welche aufgespannt wird aus der Verbindung der Schneidecken und der Längsachse als der Übergangspunkt zwischen Hauptschneide und Querschneide. Diese Verhältnisse werden in einer Frontalansicht auf die Bohrerstirn besonders deutlich.

Die Ausspitzung ist insbesondere durch eine einzige Schleifoperation gebildet. Damit ist der Vorteil verbunden, dass die Herstellung besonders wirtschaftlich ist.

Bevorzugt ist die Ausspitzung einflächig ausgebildet.

Daran ist vorteilhaft, dass eine Oberfläche der Ausspitzung kantenfrei und damit besonders reibungsarm ist. Für die Herstellung bedeutet dies, dass die Einbringung über ein Schleifwerkzeug insbesondere absatzfrei in einem Schleifgang erfolgten kann.

Insbesondere ist vorgesehen, dass die Ausspitzung - von der anliegenden Hauptschneide aus Richtung des dazugehörigen Schneidecks kommend - erst nach dem Übergangspunkt gekrümmt ist. Am Übergangspunkt weisen die Hauptschneide und die Ausspitzung (bezüglich einer Frontalansicht auf die Bohrerstirn) bevorzugt die gleiche Tangente auf. Erst nach dem Übergangspunkt nimmt die Ausspitzung einen konkav gekrümmten Verlauf an. Konkav ist hier in Referenz zu der konvex gekrümmten Hauptschneide zu interpretieren, das heißt, während sich die Hauptschneide in Richtung der Spannut wölbt, ist die Krümmung der Ausspitzung entgegengesetzt gerichtet. Hinsichtlich dieses Aspekts weiter bevorzugt ist der Übergangspunkt ein Wendepunkt.

Insbesondere läuft die Hauptschneide über einen Geradenabschnitt in den Übergangspunkt ein.

Das Bohrwerkzeug ist insbesondere ein Spiralbohrer mit verdrallt verlaufenden Spannuten.

Weiter bevorzugt ist das Bohrwerkzeug monolithisch umfassend einen Schneidenabschnitt und einen Schaftabschnitt ausgebildet. Alternativ könnte das Bohrwerkzeug als Bohrkopf ausgebildet sein, der mit einem separaten Schaft verbindbar ist.

Das Bohrwerkzeug besteht insbesondere aus einem Hartstoff, etwa Hartmetall. Unter Hartmetall wird ein Werkstoffverbund aus Karbiden als Hartstoff-Phase und zähen Metallen der Eisengruppe (Fe, Co, Ni) als Binderphase verstanden. Insbesondere sind die Hartstoffkörner von Wolframkarbid gebildet. Der Binder ist im Fall von Hartmetall in der Regel Kobalt (Co). Es kommen aber auch anderen Metalle oder Legierungen als Binder in Betracht. Im Englischen Sprachgebrauch wird Hartmetall häufig auch als *cemented carbide* bezeichnet. Insbesondere bevorzugt ist das Bohrwerkzeug als Vollhartmetall (VHM) Werkzeug ausgebildet.

Die zwei Hauptschneiden haben einen zumindest abschnittsweise bogenförmigen Verlauf. Insbesondere sind die Hauptschneiden konvex gekrümmt. Konvex bedeutet in diesem Zusammenhang, dass sich die Hauptschneiden in eine zugeordnete Spannut wölben.

Insbesondere ist vorgesehen, dass die Hauptschneiden über einen geraden Abschnitt in die Querschneide münden. Sie bilden dann mit der bezüglich einer Frontalansicht auf die Bohrerstirn ebenfalls geraden Querschneide eine Kante / einen Knick.

Die Hauptschneiden weisen also bevorzugt zentrumsnah eine nur geringe Krümmung auf und sind bevorzugt zentrumsnah von Geradenabschnitten gebildet. Durch die zentrumsnah geringe Krümmung bzw. einen weiter bevorzugt zentrumsnah geraden Verlauf werden zentrumsnah geringe Schnittkräfte erzielt. Dadurch wirkt auf das Bohrwerkzeug nur ein niedriges Moment.

Bevorzugt weist die Ausspitzung einen zumindest abschnittsweise bogenförmigen Verlauf auf mit einem Scheitelpunkt, an dem eine Krümmung des bogenförmigen Verlaufs ein Maximum haben kann.

Eine radiale Position des Scheitelpunkts in Bezug auf die Bohrerspitze liegt insbesondere zwischen 0,02 x BR und 0,1 x BR, mit BR dem halben Bohrdurchmesser. Insbesondere liegt der Scheitelpunkt zwischen 0,03 x BR und 0,07 x BR. Damit ist zum Ausdruck gebracht, dass ein Krümmungsmaximum der Ausspitzung besonders zentrumsnahe ist. Indem das Krümmungsmaximum der Ausspitzung so zentrumsnah ist, erfolgt eine Spanumlenkung bei geringen Bahngeschwindigkeiten und damit verbunden mit geringer Reibung und geringem Moment.

Bevorzugt ist vorgesehen, dass an einem Scheitelpunkt der Ausspitzung eine Tangente anlegbar ist, deren Tangentennormale zur gedachten Verbindung der Bohrerspitze mit einer Schneidecke einen Winkel zwischen 60° und 70° einnimmt.

Damit ist zum Ausdruck gebracht, dass die Ausspitzung eine über ein Krümmungsmaximum festlegbare Haupterstreckungsrichtung aufweist, welche gegenüber der gedachten Verbindung zwischen Bohrerspitze und der zugeordneten Schneidecke einen Winkel zwischen 60° und 70° einnimmt.

An einem Krümmungsmaximum erfolgt stets eine besonders starke Umlenkung eines Spans. Durch die bevorzugte Lage des Krümmungsmaximums treten nur geringe Momente und folglich geringe Bearbeitungskräfte auf. Durch die bevorzugte Lage der Haupterstreckungsrichtung der Ausspitzung wird eine besonders gute zentrumsnahe Spanabfuhr in die Spannut erreicht.

Bevorzugt ist vorgesehen, dass ein zur Bohrerlängsachse gemessener Axialwinkel der Ausspitzung zwischen 30° und 40° liegt. Insbesondere beträgt der Axialwinkel der Ausspitzung 35° ± 1°. Der Axialwinkel der Ausspitzung ist ein Maß für die axiale "Steilheit" der Ausspitzung. Ein zu flacher Verlauf, das heißt Axialwinkel von beispielsweise 45° oder mehr, verschlechtert die Spanabfuhr in die Spannut. Ein zu steiler Verlauf, das heißt Axialwinkel von beispielsweise 25° oder weniger zieht die Ausspitzung in die Länge und führt zu schleifenden Schnitten an den Übergängen der Ausspitzung zum Rücken, was ungünstig hinsichtlich Spaneinzug ist.

Der genannte bevorzugte Betrag des Axialwinkels der Ausspitzung liegt insbesondere in dem Bereich vor, in welchem die Ausspitzung sich radial nach außen erstreckt, insbesondere sich radial gerade nach außen erstreckt.

Weiter bevorzugt ist der Axialwinkel der Ausspitzung entlang des radialen Verlaufs der Ausspitzung konstant.

Schutz wird auch begehrt für ein Verfahren zur Herstellung eines Bohrwerkzeugs, wobei eine Ausspitzung an der Bohrerstirn eingebracht wird, dies umfassend die Schleifschritte mit einem Schleifwerkzeug:
i) Ausbilden einer zentrumsnahen Ausspitzung mit einem Scheitelpunkt, an welchem eine Tangentennormale einen Winkel zwischen 60° und 70° einnimmt,
ii) Ausbilden eines daran anschließenden Abschnitts der Ausspitzung durch ein gerades radial nach außen Bewegen des Schleifwerkzeugs. Beim erfindungsgemäßen Verfahren ist es vorgesehen, nach Schaffung des zentrumsnahen Radius der Ausspitzung das Schleifwerkzeug über einen geraden Schleifpfad nach radial außen zu führen. Bevorzugt ist der gerade Pfad zwischen 85° und 95° bezüglich der Verbindung von Bohrerspitze und Schneidecke orientiert. Es versteht sich für den Fachmann, dass zur Herstellung eines Bohrwerkzeugs noch weitere Operationen erforderlich sind. Im vorliegenden Absatz wird nur auf Schritte bei der Schaffung der Ausspitzung eingegangen.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
Fig. 1a-d: ein Bohrwerkzeug nach einem ersten Ausführungsbeispiel in verschiedenen Ansichten
Fig. 2a-b: ; ein Bohrwerkzeug nach einem zweiten Ausführungsbeispiel in verschiedenen Ansichten
Fig. 3a-f Schematische Darstellungen eines Verfahrens zur Herstellung bei einem Kegelmantelanschliff
Fig. 4a-f Schematische Darstellungen eines Verfahrens zur Herstellung bei einem Vierflächen-Anschliff.

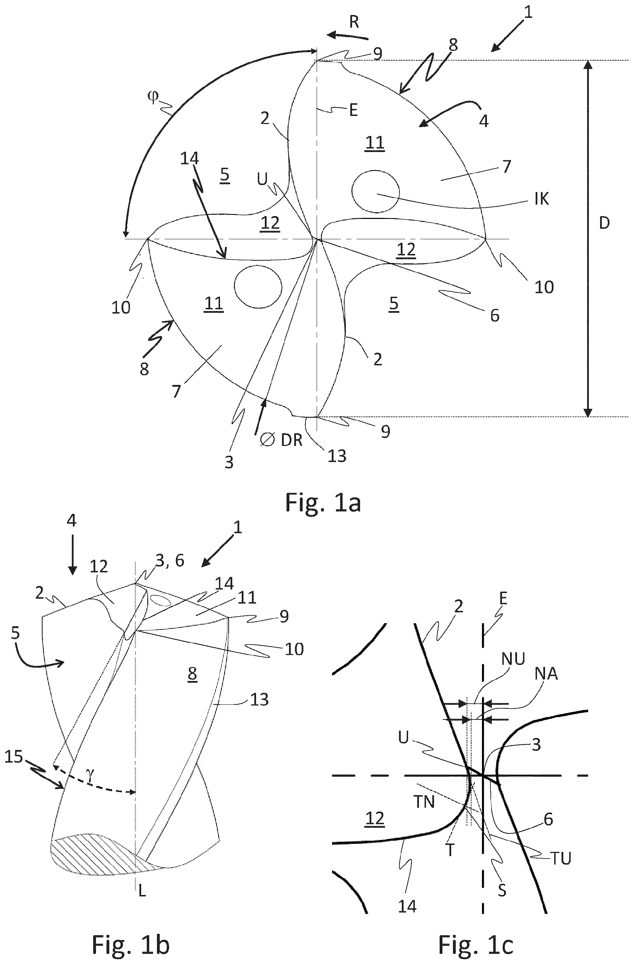

Figur 1a zeigt schematisch ein Bohrwerkzeug 1 nach einem ersten Ausführungsbeispiel in einer Frontalansicht auf eine als Bohrerstirn 4 bezeichnete Vorderseite des Bohrwerkzeugs 1. Die Blickrichtung verläuft parallel zu einer Längsachse L des Bohrwerkzeugs 1, die auch die Mittenachse darstellt, und in der vorliegenden Darstellung folglich projizierend ist.

An der Bohrerstirn 4 sind zwei Hauptschneiden 2 ausgebildet, die über eine Querschneide 6 miteinander verbunden sind.

Das erfindungsgemäße Bohrwerkzeug 1 ist ein 2-Schneider mit zwei Hauptschneiden 2.

Bevorzugt zeigen die Hauptschneiden 2 einen in Drehrichtung R gewölbten Verlauf. In anderen Worten sind die Hauptschneiden 2 bogenförmig gekrümmt, wobei sich ein Scheitel des bogenförmigen Verlaufs in Drehrichtung R erstreckt. Man spricht von konvexen Hauptschneiden 2. Eine - zumindest abschnittsweise - Bogenform der Hauptschneide 2 bewirkt eine robuste Schneide und einen sanften Schnitt.

Bevorzugt weisen die Hauptschneiden 2 in Zusammenschau einen S-förmigen Verlauf auf.

Die Hauptschneiden 2 laufen bevorzugt über gerade Abschnitte in die Querschneide 6 ein. Das heißt, bevorzugt umfasst jede Hauptschneide 2 radial außen einen bogenförmigen Abschnitt und radial innen einen geraden Abschnitt.

Das Bohrwerkzeug 1 ist entlang seiner Längsachse L drehbar, wobei vorliegend eine Drehrichtung R vorgesehen ist. Das vorliegende Bohrwerkzeug 1 ist also rechtsdrehend. Die Erfindung kann auch auf linksdrehende Werkzeuge angewendet werden. Bezüglich der Drehrichtung R vor einer Hauptschneide 2 liegt jeweils eine Spannut 5, die sich in einem Drallwinkel entlang der Längsachse L erstreckt.

Gezeigt sind ferner Austrittsöffnungen von innenliegenden Kühlmittelkanälen IK, welche optional vorhanden sein können.

Der vorderste Punkt der Querschneide 6 bildet eine auf der Längsachse L liegende Bohrerspitze 3.

Insbesondere ist das Bohrwerkzeug 1 gleichgeteilt, das heißt die Hauptschneiden 2 sind entlang 180° verteilt. Eine Verbindung von gegenüberliegenden Schneidecken 9 enthält die Bohrerspitze 3.

Außerdem sind die beiden Hauptschneiden 2 bevorzugt gleich ausgeführt, man spricht von einem gleichgeteilt symmetrischen Bohrwerkzeug 1.

Zwischen den Spannuten 5 sind Stege 7 ausgebildet. An einem Außenumfang der Stege befindet sich ein Rücken 8. Im vorliegenden Ausführungsbeispiel sind Führungsfasen 13 ausgebildet, die am Bohrdurchmesser D liegen. Dem gegenüber liegt der Rücken 8 zurückgesetzt auf einem Rückendurchmesser DR.

Bezüglich der Drehrichtung R hinter jeder Hauptschneide 2 schließt eine Freifläche 11 an. Im vorliegenden Ausführungsbeispiel ist die Bohrerstirn 4 mit einem Kegelmantelanschliff versehen, das heißt, die Freiflächen 11 sind von Segmenten eines Kegelmantels gebildet.

In die Freifläche 11 an der Bohrerstirn 4 ist eine Ausspitzung 12 eingebracht, durch welche die Querschneide 6 auf ein gewünschtes Maß verkleinert ist.

Die Freifläche 11 erstreckt sich am Umfang von einer Schneidecke 9 bis zu einem rückwärtigen Eck 10, an dem die Freifläche 11 unter Ausbildung einer Kante in die Spannut 5 übergeht. In anderen Worten ist das rückwärtige Eck 10 in einer Frontalansicht auf die Bohrerstirn 4 jener am Außenumfang liegender Punkt, an dem sich der Rücken 8 und die Kontur 14 der Ausspitzung 12 schneiden. Als Kontur 14 der Ausspitzung 12 ist die Schnittlinie zwischen der Ausspitzung 12 und der Freifläche 11 bezeichnet.

Die Kontur 14 der Ausspitzung 12 markiert auch den Übergang der Freifläche 11 in die Spannut 5. Die Ausspitzung 12 ist als zur Spannut 5 gehörig anzusehen.

In der vorliegenden Frontalansicht auf die Bohrerstirn 4 kann ein Öffnungswinkel ϕ einer Spannut 5 an der Bohrerstirn 4 definiert werden, welcher Öffnungswinkel ϕ aufgespannt wird zwischen
- einer gedachten Verbindung der Bohrerspitze 3 mit einer Schneidecke 9 der Hauptschneide 2 und, in Drehrichtung R darauf folgend,
- einer gedachten Verbindung der Bohrerspitze 3 zu dem rückwärtigen Eck 10, welches am Rücken 8 am Übergang der Freifläche 11 in die Spannut 5 gebildet ist,
wobei der Öffnungswinkel ϕ zwischen 85° und 95° beträgt.

Diese Definition des Öffnungswinkels ϕ gilt für Bohrwerkzeuge mit Kegelmantelanschliff. Bevorzugt liegt der Öffnungswinkel ϕ bei 90° ± 2°.

Im vorliegenden Ausführungsbeispiel und weiter bevorzugt beträgt der Öffnungswinkel 90°.

Anzumerken ist, dass sich der gekrümmte Verlauf der Ausspitzung 12 entlang der Kontur 14 durch die Kegelform der Bohrerstirn 4 in diesem Ausführungsbeispiel ergibt. Beim Einbringen der Ausspitzung 12 durch Schleifen vollzieht die Schleifscheibe bevorzugt einen geraden Pfad von radial innen nach außen und bevorzugt in konstanter Höhe bezüglich der Längsachse L.

Für weitere Betrachtungen wird eine Teilungsebene E definiert, die das Bohrwerkzeug in der Mitte teilt und welche Teilungsebene E die Längsachse L und die Verbindung der Schneidecken 9 enthält.

Die Ausspitzung 12 setzt an einem als Übergangspunkt U bezeichneten Schnittpunkt zwischen der an die Ausspitzung 12 anschließenden Hauptschneide 2 und der Querschneide 6 an.

Die Ausspitzung 12 ist derart ausgebildet, dass sie sich bezüglich eines Normalabstands zur gedachten Verbindung der Bohrerspitze 3 mit der Schneidecke 9 wenigstens gleich weit in Richtung eines Zentrums, das heißt in Richtung Teilungsebene E, des Bohrwerkzeugs 1 erstreckt wie der Übergangspunkt U. Insbesondere erstreckt sich die Ausspitzung 12 weiter in Richtung der gedachten Verbindung der Bohrerspitze 3 mit der Schneidecke 9 als der der Übergangspunkt U. Anders ausgedrückt, ragt die Ausspitzung 12 weiter in Richtung Teilungsebene E als der mit der Ausspitzung 12 verbundene Übergangspunkt U. In anderen Worten überragt die Ausspitzung 12 die Querschneide in Richtung Teilungsebene E.

Durch die Ausprägung der Ausspitzung 12 wird zentrumsnah zusätzlicher Spanraum geschaffen.

Zusätzlich wird über die Kombination aus dem Öffnungswinkel ϕ und der speziellen Geometrie der Ausspitzung 12 ein vorteilhafter Spanabfluss ermöglicht.

Indem sich die Ausspitzung 12 weit ins Zentrum erstreckt und zentrumsnah ein Krümmungsmaximum aufweist, erfahren Späne zentrumsnah eine starke Umlenkung und werden zentrumsnah in die Spannut 5 gelenkt. Dadurch geschieht ein wesentlicher Teil der Spanumlenkung bei niedrigen Bahngeschwindigkeiten und verursacht geringe Kräfte.

Der vorteilhafte Spanabfluss in Verbindung mit dem erhöhten Spanraum im Zentrum des Bohrwerkzeugs 1 führt zu signifikant geringeren Schnittkräften und damit zu herabgesetzten mechanischen Belastungen für Werkzeug und Werkstück.

Die Ausspitzung 12 geht im Bereich der Querschneide 6 bevorzugt knickfrei, insbesondere tangential aus der Hauptschneide 2 über. Anders ausgedrückt, schließt die Ausspitzung 12 am Übergangspunkt U knickfrei, insbesondere tangential an die angrenzende Hauptschneide 2 an.

Mit einem "tangentialen" Übergang ist gemeint, dass gemäß dieser bevorzugten Weiterbildung am Übergangspunkt U die Hauptschneide 2 und die Kontur 14 der Ausspitzung 12 die gleiche Tangente aufweisen.

Durch einen knickfreien, insbesondere tangentialen Übergang von Hauptschneide 2 und Ausspitzung 12 ist eine besonders sanfte und gleichmäßige Spanbildung gewährleistet.

Figur 1b zeigt eine Seitenansicht des Bohrwerkzeugs 1 aus Figur 1a.

Das rückwärtige Eck 10 kann in dieser Ansicht vorteilhaft definiert werden als Schnittpunkt einer Hinterkante 15 des Rückens 8 mit der Kontur 14 der Ausspitzung 12, welche Kontur 14 den Übergang der Freifläche 11 in die Spannut 5 markiert.

In Figur 1b ist ferner ein zur Bohrerlängsachse L gemessener Axialwinkel γ der Ausspitzung 12 eingetragen.

Bevorzugt ist vorgesehen, dass der Axialwinkel γ der Ausspitzung 12 zwischen 30° und 40° liegt. Insbesondere beträgt der Axialwinkel der Ausspitzung 35° ± 2°, weiter bevorzugt 35° ± 1 °. Gemessen wird der Axialwinkel insbesondere in dem Bereich der Ausspitzung 12, wo sich die Ausspitzung 12 nach radial außen erstreckt, insbesondere entlang einer geraden Strecke sich nach radial außen erstreckt.

Figur 1c zeigt eine Detailansicht der Darstellung von Figur 1a, also eine Frontalansicht auf die Bohrerstirn 4 entlang der Längsachse L.

Anhand dieser Detailansicht wird die erfindungsgemäße Ausprägung der Ausspitzung 12 noch besser ersichtlich.

Die Ausspitzung 12 erstreckt sich erfindungsgemäß weit ins Zentrum dermaßen, dass ein Normalabstand NA eines innenliegenden Punktes der Ausspitzung 12 zur gedachten Verbindung der Bohrerspitze 3 mit der Schneidecke 9 kleiner oder gleich ist dem Normalabstand NU des Übergangspunkts U zwischen der an die Ausspitzung 12 anschließenden Hauptschneide 2 und der Querschneide 6 zur gedachten Verbindung der Bohrerspitze 3 mit einer Schneidecke 9 (nicht mehr im Bild).

In anderen Worten erstreckt sich die Kontur 14 der Ausspitzung 12 wenigstens soweit ins Zentrum des Bohrwerkzeugs 1 wie der an die Ausspitzung 12 anschließende Übergangspunkt U. Bevorzugt führt die Kontur 14 der Ausspitzung 12 weiter ins Zentrum als der Übergangspunkt U. Anders ausgedrückt erstreckt sich die Ausspitzung bis "hinter" die Querschneide 6.

Als Maß für den Abstand vom Zentrum ist der Normalabstand von der Teilungsebene E gemeint, nicht notwendigerweise ein Abstand zur Bohrerspitze 3.

Ferner kann eine Haupterstreckungsrichtung der Ausspitzung 12 definiert werden:
die Ausspitzung 12 weist zentrumsnah einen Scheitelpunkt S auf, an dem die Krümmung der Kontur 14 der Ausspitzung 12 ein Maximum haben kann. Ist die Ausspitzung 12 zentrumsnah kontinuierlich, beispielsweise entlang eines Krümmungsradius gekrümmt, kann der der Scheitelpunkt S in der Mitte des kontinuierlichen Krümmungsverlaufs festgelegt werden.

Am Scheitelpunkt S kann eine Tangente T festlegt werden. Eine normal zur Tangente T verlaufende Tangentennormale TN legt die Haupterstreckungsrichtung der Ausspitzung 12 fest.

Am Übergangspunkt U zwischen der zugeordneten Hauptschneide 2 und der Querschneide 6, an welchem Übergangspunkt U die Ausspitzung 12 knickfrei an die Hauptschneide 2 anschließt, weisen die Hauptschneide 2 und die Ausspitzung 12 (bezüglich der gewählten Frontalansicht, ersichtlich an der Kontur 14) eine gemeinsame Tangente TU am Übergangspunkt U auf.

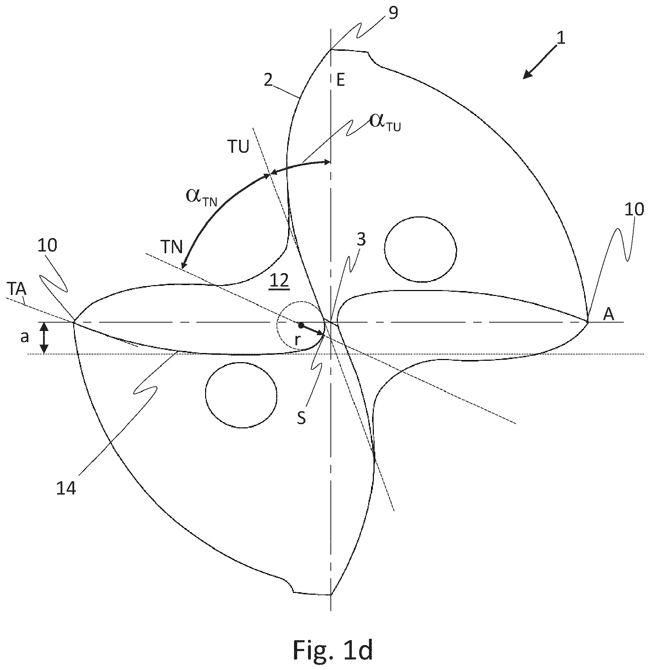

Figur 1d zeigt abermals das gleiche Ausführungsbeispiel in einer Frontalansicht auf die Bohrerstirn 4. Der Übersichtlichkeit halber werden weitere Aspekte der Erfindung anhand dieser separaten Figur erläutert. Ebenfalls aus Gründen der Übersichtlichkeit werden nicht sämtliche Bezugszeichen eingetragen.

Die Ausspitzung 12 weist also zentrumsnah eine Kehle mit einem Krümmungsradius auf. Bevorzugt beträgt ein Krümmungsradius - r - der Ausspitzung 12 am Scheitelpunkt S zwischen 0,06 bis 0,09 x D mit D dem Bohrdurchmesser. Weiter bevorzugt beträgt der Krümmungsradius - r - der Ausspitzung 12 zwischen 0,07 bis 0,08 x D, insbesondere 0,075 x D. Hilfsweise ist der betreffende Krümmungskreis mit Krümmungsradius - r - als Radius eingetragen.

Bevorzugt nimmt die Tangente TU an die Hauptschneide 2 am Übergangspunkt U mit der gedachten Verbindung zwischen Bohrerspitze 3 und Schneidecke 9 einen Winkel α_{TU} zwischen 10° und 30° ein, weiter bevorzugt einen Winkel α_{TU} zwischen 15° und 25° ein, noch weiter bevorzugt einen Winkel zwischen 17° und 23° ein. Insbesondere beträgt der Winkel α_{TU} 20° ± 2°.

Die durch die Tangentennormale TN festgelegte Haupterstreckungsrichtung der Ausspitzung 12 schließt mit der Tangente TU am Übergangspunkt U einen Winkel α_{TN} zwischen 30° und 60° ein, insbesondere einen Winkel α_{TN} zwischen 40° und 50° ein, weiter bevorzugt einen Winkel α_{TN} zwischen 42° und 48° ein. Als besonders günstig, insbesondere hinsichtlich einer Spanableitung vom radial innenliegenden Abschnitt der Hauptschneide 2, hat sich ein Winkel α_{TN} von 45° ± 2°erwiesen.

Weiter bevorzugt schließt die durch die Tangentennormale TN festgelegte Haupterstreckungsrichtung der Ausspitzung 12 mit der gedachten Verbindung zwischen Bohrerspitze 3 und Schneidecke 9 einen Winkel zwischen 60° und 70° ein. Insbesondere liegt dieser Winkel bei 65° ± 2°.

Diese Ausrichtung hat sich als besonders günstig für eine zentrumsnahe Spanumlenkung und -ableitung erwiesen.

Ferner kann ein Übermittenmaß a der Ausspitzung 12 angegeben werden:
das Übermittenmaß - a - gibt an, wie weit sich die Ausspitzung 12 maximal über eine Äquatorebene A erstreckt, die 90° gegenüber der Teilungsebene E verläuft und die Längsachse L enthält.

Im vorliegenden Beispiel mit einem Öffnungswinkel ϕ von 90° fällt die Spur der Äquatorebene A mit der Verbindung der zwei gegenüberliegenden rückwärtigen Ecken 10 zusammen.

Das Übermittenmaß - a - der Ausspitzung 12 beträgt bevorzugt zwischen 5% und 15% des Bohrdurchmessers D, weiter bevorzugt 10 % ± 2% des Bohrdurchmessers D.

Bevorzugt läuft die Hauptschneide 2 über einen geraden Abschnitt in den Übergangspunkt U ein. Dadurch bilden Hauptschneide 2 und Querschneide 6 am Übergangspunkt U einen Knick.

Bevorzugt nimmt die Querschneide 6 mit der gedachten Verbindung zwischen Bohrerspitze 3 und Schneidecke 9 einen Winkel zwischen 50° und 70° ein, insbesondere einen Winkel von 60° ± 2° ein.

Zusammen mit der bereits diskutierten bevorzugten Orientierung der Hauptschneide 2 am Übergangspunkt U ergibt sich somit als insbesondere bevorzugt, dass die Hauptschneide 2 und die Querschneide 6 am Übergangspunkt U einen Außenwinkel von 140° ± 4° einnehmen.

Das Bohrwerkzeug 1 ist insbesondere symmetrisch ausgestaltet, das heißt, die diskutierten geometrischen Merkmale gelten für beide Spannuten 5. In anderen Worten kann durch eine 180°-Drehung entlang der Längsachse L das Bohrwerkzeug 1 in sich übergeführt werden.

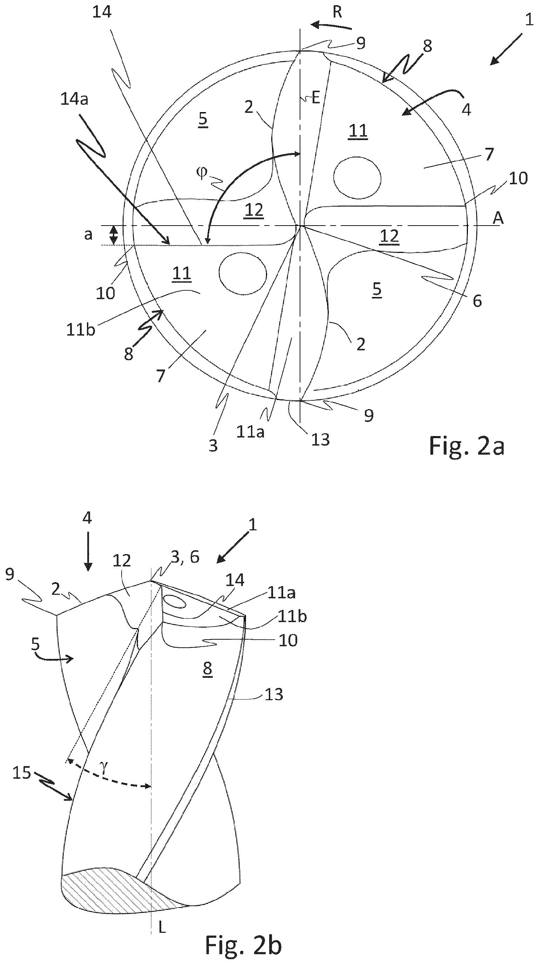

Figuren 2a und 2b zeigen verschiedene Ansichten eines Bohrwerkzeugs 1 nach einem weiteren Ausführungsbeispiel.

Figur 2a zeigt eine Frontalansicht auf die Bohrerstirn 4 eines erfindungsgemäßen Bohrwerkzeugs 1.

Bei dem Ausführungsbeispiel ist an der Bohrerstirn 4 ein sogenannter 4-Flächenanschliff ausgebildet.

Bei einem 4-Flächenanschliff umfasst die Freifläche 11 zwei Teilfacetten 11a und 11b. Die Teilfacetten 11a, 11b der Freifläche 11 weisen unterschiedliche Freiwinkel auf. Die Teilfacetten 11a, 11b der Freifläche 11 sind bevorzugt eben, das heißt nicht gewölbt.

Der Öffnungswinkel ϕ ist für einen Anschliff mit ebenen Freiflächen-Facetten, wie vorliegend beim 4-Flächenanschliff, definiert als aufgespannt zwischen:
- einer gedachten Verbindung der Bohrerspitze 3 mit der Schneidecke 9 der zugeordneten Hauptschneide 2 und
- dem sich nach radial außen erstreckenden Abschnitt der Kontur 14 der Ausspitzung 12,
wobei der Öffnungswinkel ϕ zwischen 85° und 95° beträgt. Bevorzugt liegt der Öffnungswinkel ϕ bei 90° ± 2°. Im vorliegenden Ausführungsbeispiel und weiter bevorzugt beträgt der Öffnungswinkel 90°.

Unter dem sich nach radial außen erstreckenden Abschnitt der Kontur 14 der Ausspitzung 12 wird jener Abschnitt der Ausspitzung 12 verstanden, der an die zentrumsnahe Krümmung der Ausspitzung 12 anschließt und für einen Anschliff mit ebenen Freiflächen-Facetten im Wesentlichen gerade nach radial außen verläuft.

Bevorzugt ist vorgesehen, dass bei einem Bohrwerkzeug 1 mit einem Flächenanschliff die Kontur 14 der Ausspitzung 12 einen zumindest abschnittsweise geraden Verlauf in der Frontalansicht auf die Bohrerstirn 4 aufweist, welcher gerader Abschnitt in diesem Fall bevorzugt als zweiter Schenkel für die Definition des Öffnungswinkels ϕ herangezogen wird.

Ein solcher gerader Verlauf ergibt sich beispielsweise durch einen geraden Schleifpad bei der Herstellung der Ausspitzung 12 durch ein Schleifwerkzeug.

Insbesondere weist die Kontur 14 der Ausspitzung 12 einen radial außen liegenden geraden Abschnitt 14a auf.

Mit dem radial außen liegenden geraden Abschnitt 14a der Ausspitzung 12 ist jener gerader Abschnitt 14a der Kontur 14 der Ausspitzung 12 gemeint, über den die Ausspitzung 12 in das rückwärtige Eck 10 einmündet.

Dieser gerade Abschnitt 14a wird dann als zweiter Schenkel in der Winkelbestimmung des Öffnungswinkels ϕ herangezogen.

Zum besseren Verständnis sei erläutert, dass die Ausspitzung 12 insbesondere derart eingebracht wird, dass eine Schleifscheibe zunächst die radial innenliegende Rundung der Ausspitzung 12 abbildet und dann entlang eines geraden Pfads von radial innen nach außen und in bevorzugt konstanter Höhe bezüglich der Längsachse L die restliche Kontur 14 der Ausspitzung 12 erzeugt. Da die Ausspitzung 12 im vorliegenden Ausführungsbeispiel in eine ebene Freifläche 11 eingebracht ist, bildet sich ein gerader Pfad einer Schleifscheibe auch als Geradenabschnitt der Kontur 14 der Ausspitzung 12 ab.

Auch für diese Ausführungsform mit einem einen Anschliff mit ebenen Freiflächen-Facetten kann ein Übermittenmaß a der Ausspitzung 12 angegeben werden:
das Übermittenmaß - a - gibt an, wie weit sich die Ausspitzung 12 maximal über eine Äquatorebene A erstreckt, die 90° gegenüber der Teilungsebene E verläuft und die Längsachse L enthält.

Das Übermittenmaß - a - der Ausspitzung 12 beträgt bevorzugt zwischen 5% und 15% des Bohrdurchmessers D, weiter bevorzugt 10 % ± 2% des Bohrdurchmessers D.

Die Ausgestaltung der Ausspitzung 12 ist analog zu dem zuvor diskutierten Ausführungsbeispiel mit Kegelmantelanschliff. Insbesondere gelten die Details zur Krümmung, der Haupterstreckungsrichtung und der bevorzugten Maße der Ausspitzung 12 für alle Ausführungsformen, sei es ein Bohrwerkzeug 1 mit Kegelmantelanschliff oder Flächen-Anschliff mit ebenen Freiflächenfacetten.

In Figur 2b ist ferner ein zur Bohrerlängsachse L gemessener Axialwinkel γ der Ausspitzung 12 eingetragen.

Bevorzugt ist vorgesehen, dass der Axialwinkel γ der Ausspitzung 12 zwischen 30° und 40° liegt. Insbesondere beträgt der Axialwinkel der Ausspitzung 35° ± 1 °. Der Axialwinkel der Ausspitzung ist ein Maß für die axiale "Steilheit" der Ausspitzung.

Alle diskutierten Weiterbildungen und Vorteile gelten gleichermaßen für alle Ausführungsbeispiele.

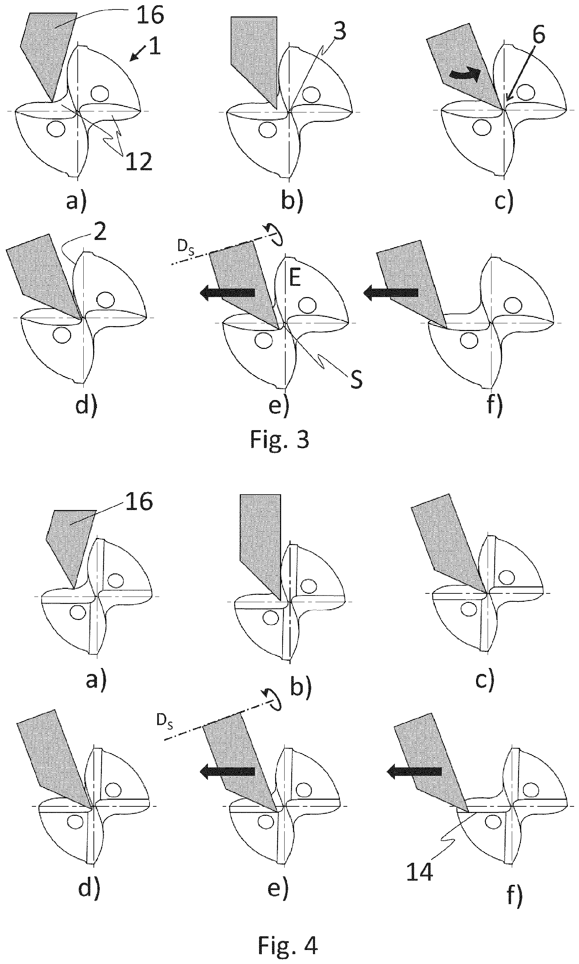

Figuren 3a-f illustrieren ein bevorzugtes Verfahren zur Einbringung der Ausspitzung 12 bei einem Bohrwerkzeug 1 mit Kegelmantelanschliff.

Zum besseren Verständnis sind die Konturen der Ausspitzung 12 bereits von Beginn an eingetragen. Es versteht sich, dass sich die Konturen der Ausspitzung 12 erst den hier gezeigten Ablauf zur Einbringung der Ausspitzung 12 ergeben. Aus Gründen der Übersichtlichkeit sind Bezugszeichen nur zu einzelnen Zeichnungen vergeben.

Ein Schleifwerkzeug 16, vorliegend eine Schleifscheibe, wird zunächst Richtung Bohrspitze 3 gefahren. Eine Rotation des Schleifwerkzeugs 16 erfolgt entlang einer Drehachse Ds.

Im Anschluss wird der zentrumsnahe Teil der Ausspitzung 12 eingeschliffen derart, dass der Scheitelpunkt S der Ausspitzung, bezogen auf die Teilungsebene E, "hinter" dem Schnittpunkt von Querschneide 6 mit der Hauptschneide 2 liegt, Schritte d) - e) der Darstellung.

Schließlich wird das Schleifwerkzeug 16 entlang eines geraden Schleifpfads radial nach außen geführt, Schritte f) der Darstellung.

Figuren 4a-f illustrieren ein bevorzugtes Verfahren zur Einbringung der Ausspitzung 12 bei einem Bohrwerkzeug 1 mit 4-Flächenanschliff.

Der Ablauf erfolgt analog zu dem anhand Figuren 3a-f erklärten Verfahren. Auf eine Wiederholung der Bezugszeichen wird verzichtet.

Wegen der ebenen Freifläche ergibt sich hier die radial auslaufende Kontur 14 der Ausspitzung 12 als Geradenabschnitt.

### Liste der verwendeten Bezugszeichen:

- 1: Bohrwerkzeug
- 2: Hauptschneide
- 3: Bohrerspitze
- 4: Bohrerstirn
- 5: Spannut
- 6: Querschneide
- 7: Steg
- 8: Rücken
- 9: Schneidecke
- 10: Rückwärtiges Eck
- 11: Freifläche
- 12: Ausspitzung
- 13: Führungsfase
- 14: Kontur der Ausspitzung
- 15: Hinterkante des Rückens
- 16: Schleifwerkzeug

## Patentansprüche

1. Bohrwerkzeug mit
zwei Hauptschneiden (2) mit zumindest abschnittsweise bogenförmigem Verlauf, die über eine Querschneide (6) miteinander verbunden sind, einer Bohrerstirn (4), einer Bohrerlängsachse (L) um welche das Bohrwerkzeug (1) in einer Drehrichtung (R) drehbar ist,
einer auf der der Bohrerlängsachse (L) liegenden Bohrerspitze (3),
zwei entlang der Bohrerlängsachse (L) verlaufenden Spannuten (5), zwischen den Spannuten (5) ausgebildeten Stegen (7), welche umfangsseitig einen Rücken (8) bilden,
einer in die Bohrerstirn (4) eingebrachten Ausspitzung (12), wobei, bezogen auf eine Frontalansicht auf die Bohrerstirn (4), ein Öffnungswinkel (cp) einer Spannut (5) an der Bohrerstirn (4) ausgebildet ist, der:
bei einem Kegelmantelanschliff der Bohrerstirn (4) definiert ist als aufgespannt zwischen
- einer gedachten Verbindung der Bohrerspitze (3) mit einer Schneidecke (9) der Hauptschneide (2) und
- einer gedachten Verbindung der Bohrerspitze (3) zu einem rückwärtigen Eck (10), welches am Rücken (8) am Übergang der Freifläche (11) in die Spannut (5) gebildet ist,
bei einem Flächen-Anschliff der Bohrerstirn (4) definiert ist als aufgespannt zwischen
- einer gedachten Verbindung der Bohrerspitze (3) mit einer Schneidecke (9) der Hauptschneide (2) und
- einem sich nach radial außen erstreckenden Abschnitt einer Kontur (14) der Ausspitzung (12),
welcher Öffnungswinkel (ϕ) zwischen 85° und 95° beträgt,
und die Ausspitzung (12) in derart die Bohrerstirn (4) eingebracht ist, dass ein Normalabstand (NA) eines innenliegenden Punktes der Ausspitzung (12) zu einer gedachten Verbindung der Bohrerspitze (3) mit einer Schneidecke (9) kleiner oder gleich ist dem Normalabstand (NU) eines Übergangspunkts (U) zwischen der an die Ausspitzung (12) anschließenden Hauptschneide (2) und der Querschneide (6) zur gedachten Verbindung der Bohrerspitze (3) mit einer Schneidecke (9), wobei die Ausspitzung (12) am Übergangspunkt (U) ansetzt und knickfrei an die angrenzende Hauptschneide (2) anschließt.

2. Bohrwerkzeug (1) nach Anspruch 1, wobei sich die Ausspitzung (12) weiter in Richtung der gedachten Verbindung der Bohrerspitze (3) mit einer Schneidecke (9) erstreckt als der an die Ausspitzung (12) anschließende Übergangspunkt (U) zwischen Hauptschneide (2) und Querschneide (6).

3. Bohrwerkzeug (1) nach Anspruch 1 oder 2, wobei die Ausspitzung (12), bezogen auf eine Frontalansicht auf die Bohrerstirn (4), einen zumindest abschnittsweise bogenförmigen Verlauf aufweist mit einem Scheitelpunkt (S), dessen radiale Position in Bezug auf die Bohrerspitze (3) zwischen 0,1 x BR und 0,33 x BR liegt, mit BR dem halben Bohrdurchmesser (D).

4. Bohrwerkzeug (1) nach einem der vorangegangenen Ansprüche, wobei der Übergangspunkt (U) zwischen Hauptschneide (2) und Querschneide (6) bezüglich einer Krümmung der Ausspitzung (12) einen Wendepunkt darstellt.

5. Bohrwerkzeug (1) nach einem der vorangegangenen Ansprüche, wobei die Ausspitzung (12) und die Hauptschneide (2) am Übergangspunkt (U) zwischen Hauptschneide (2) und Querschneide (6) eine gemeinsame Tangente (TU) aufweisen.

6. Bohrwerkzeug (1) nach einem der vorangegangenen Ansprüche, wobei an einem Scheitelpunkt (S) der Ausspitzung (12) eine Tangente anlegbar ist, deren Tangentennormale (TN) eine Haupterstreckungsrichtung der Ausspitzung (12) festlegt, welche mit der Tangente (TU) am Übergangspunkt (U) zwischen Hauptschneide (2) und Querschneide (6) einen Winkel (α_{TN}) zwischen 30° und 60° einnimmt.

7. Bohrwerkzeug (1) nach einem der vorangegangenen Ansprüche, wobei an einem Scheitelpunkt (S) der Ausspitzung (12) eine Tangente anlegbar ist, deren Tangentennormale (TN) eine Haupterstreckungsrichtung der Ausspitzung (12) festlegt, welche zur gedachten Verbindung der Bohrerspitze (3) mit einer Schneidecke (9) einen Winkel zwischen 60° und 70° einnimmt.

8. Bohrwerkzeug (1) nach einem der vorangegangenen Ansprüche, wobei eine Tangente (TU) an die Hauptschneide (2) am Übergangspunkt (U) zwischen Hauptschneide (2) und Querschneide (6) mit der gedachten Verbindung zwischen Bohrerspitze (3) und Schneidecke (9) einen Winkel (α_{TU}) zwischen 10° und 30° einnimmt.

9. Bohrwerkzeug (1) nach einem der vorangegangenen Ansprüche, wobei die Ausspitzung (12) zentrumsnah ein Krümmungsmaximum aufweist mit einem Krümmungsradius (r) zwischen 0,06 bis 0,09 x D, mit D dem Bohrdurchmesser.

10. Bohrwerkzeug (1) nach einem der vorangegangenen Ansprüche, wobei die Ausspitzung (12) einflächig ausbildet ist.

11. Bohrwerkzeug (1) nach einem der vorangegangenen Ansprüche, wobei ein zur Bohrerlängsachse (L) gemessener Axialwinkel (y) der Ausspitzung (12) zwischen 30° und 40° beträgt.

12. Verfahren zur Herstellung eines Bohrwerkzeugs (1), insbesondere eines Bohrwerkzeugs (1) nach einem der vorangegangenen Ansprüche, wobei eine Ausspitzung (12) an der Bohrerstirn (4) eingebracht wird, dies umfassend die Schleifschritte mit einem Schleifwerkzeug (16):
i) Ausbilden einer zentrumsnahen Ausspitzung (12) mit einem Scheitelpunkt (S), an welchem eine Tangentennormale (TN) einen Winkel zwischen 60° und 70° einnimmt,
ii) Ausbilden eines daran anschließenden Abschnitts der Ausspitzung (12) durch ein gerades radial nach außen Bewegen des Schleifwerkzeugs (16).
